# EUROPEAN PATENT APPLICATION

(11) **EP 1 081 878 A2**
(43) Date of publication of application: **07.03.2001**
(21) Application number: 00307172.7
(22) Date of filing: 21.08.2000
(51) Int. Cl.: H04B 7/15, H04B 1/50

(54) **Single antenna repeater and method of repeating a signal**

(30) Priority: 31.08.1999 US 386134
(71) Applicant: LUCENT TECHNOLOGIES INC., Murray Hill, New Jersey 07974-0636 (US)
(72) Inventor: Myer, Robert E., Denville, NJ 07834 (US)
(74) Representative: Buckley, Christopher Simon Thirsk

(57) **Abstract**

A repeater (16) includes a single antenna (20), connected to a first terminal (24) of a three-terminal circulator (22), and an amplifier (32) connected between the second (26) and third (28) terminals of the circulator. The circulating direction of the circulator is from the first terminal to the second terminal, the second to the third terminal, and the third terminal to the first terminal. The circulator supplies signals received by the antenna (20) to the amplifier, and supplies the amplified received signals to the antenna (20) for transmission.

## Description

### Field Of The Invention

The present invention relates to telecommunications transmission systems; and more particularly, a repeater for use in a wireless communication system.

### Description Of Related Art

In standard wireless communication systems, such as Code Division Multiple Access (CDMA) systems, there will be areas that can not normally be covered by a cell site because of a weakening of signals due to terrain or other structural obstacles, a condition known as shadow fading. Coverage can often be improved by increasing the cell site transmitted power, but this approach may not be efficient.

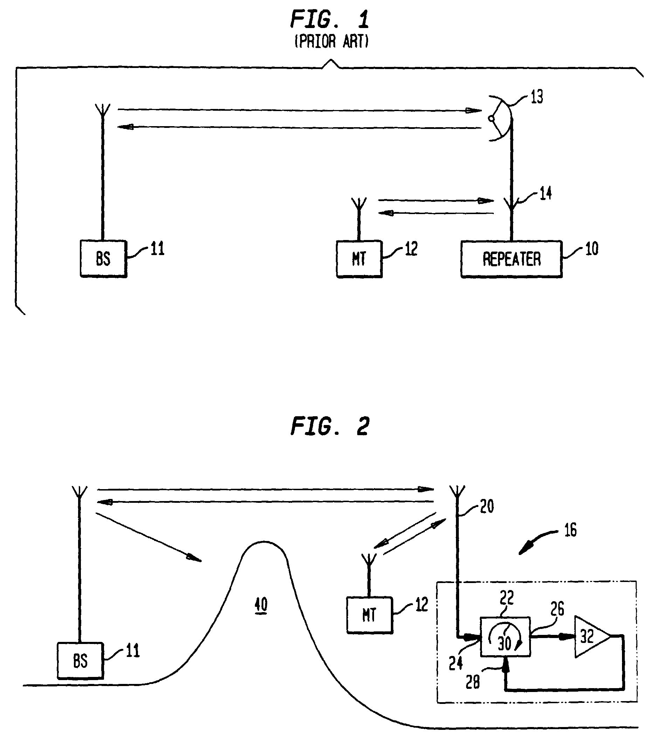

An alternate approach for improving coverage is to use a range repeater to boost the power of a transmitted signal. A system employing a repeater is illustrated in Fig. 1. As shown, the repeater 10 will receive signals on a first frequency from and transmit signals on a second frequency to a base station 11 using a first, highly directional dish antenna 13. The repeater 10 will also receive signals on the second frequency from and transmit signals on the first frequency to a mobile terminal 12 using a second, omni or directional, antenna 14. The signals transmitted by the base station 11 are at the first frequency and signals transmitted by the mobile terminal 12 are at the second frequency, which is different from the first frequency. Accordingly, separating the signals being transmitted from the signals being received by either of the first antenna 13 or the second antenna 14 is easily accomplished using a duplexer (not shown).

However, a duplexer can not separate signals at the same frequency, which is why the repeater 10 can not transmit and receive signals on the same frequency. Therefore, at least two antennas are needed. Specifically, signals received from the base station 11 by the first antenna 13 are retransmitted to the mobile terminal 12 using the second antenna 14. Similarly, signals received from the mobile terminal 12 using the second antenna 14 are retransmitted to the base station 11 by the first antenna 13. Unfortunately, antennas are expensive, increasing the cost of the wireless communication system as the number of antennas is increased. Accordingly, a demand for minimizing the number of antennas in wireless communication systems exists.

### Summary Of The Invention

The repeater according to the present invention reduces the number of antennas required in wireless communication system by including a single antenna. A circulator is used to overcome the problem of separating same frequency transmit and receive signals on one antenna. More specifically, the repeater according to the present invention includes a single antenna connected to the circulator at a first terminal of a circulator. The input of an amplifier is connected to the circulator at a second terminal, which is adjacent the first terminal in a circulating direction of the circulator, and the output of the amplifier is connected to a third terminal, which is adjacent to the second terminal in the circulating direction of the circulator. Signals received by the single antenna are received at the first terminal of the circulator and output to the amplifier via the second terminal. The amplified signals output by the amplifier are received by the second terminal of the circulator, and output for retransmission on the single antenna via the third terminal. By using only a single antenna, the cost of the repeater and the cost of the wireless communication system including the repeater are reduced.

### Brief Description Of The Drawings

The present invention will become more fully understood from the detailed description given hereinbelow and the accompanying drawings which are given by way of illustration only, wherein like reference numerals designate corresponding parts in the various drawings, and wherein:
Fig. 1 illustrates a prior art repeater, and
Fig. 2 illustrates an embodiment of a repeater according to the present invention.

### Detailed Description Of The Preferred Embodiments

Fig. 2 illustrates an embodiment of a repeater according to the present invention. As shown; the repeater 16 includes a single antenna 20 connected to a first terminal 24 of a three terminal circulator 22. The input of an amplifier 32 is connected to the second terminal 26 of the circulator 22, and the output of the amplifier 32 is connected to the third terminal 28 of the circulator 22.

A circulator is a well-known waveguide component having a number of terminals so arranged that energy entering one terminal is transmitted to the next adjacent terminal in a particular or circulating direction. The circulator 22 has a circulating direction 30 shown in Fig. 2. Accordingly, signals received at the first terminal 24 are output via the second terminal 26, signals received by the second terminal 26 are output via the third terminal 28, and signals received by the third terminal 28 are output by the first terminal 24. Preferably, the circulator 22 is a high isolation circulator.

In operation, signals transmitted by the base station 11 are not directly received by the mobile terminal 12 because of an obstacle 40. Similarly, signals transmitted by the mobile terminal 12 are not directly received by the base station 11 because of the obstacle 40. Instead these transmitted signals are received by the antenna 20, and are supplied to the first terminal 24 of the circulator 22. The circulator 22 outputs the received signals at the second terminal 26. The amplifier 32 amplifies the received signals output from the second terminal 26, and supplies the amplified received signals to the third terminal 28 of the circulator 22. The circulator 22 outputs the amplified received signals at the first terminal 26, and the antenna 20 radiates the amplified received signals. The radiated, amplified received signals can then be received by either the base station 11 or the mobile terminal 12.

Even though the signals transmitted and received by the antenna 20 are at the same frequency, as long as the impedance of the antenna 20 and the associated circuitry are matched, the circulator 22 satisfactorily separates the transmitted and received signals. It will be appreciated that the associated circuitry includes not only the circulator 22 and amplifier 22, but also, for example, a cable connecting the antenna 20 to the circulator 22.

Because the repeater according to the present invention uses a single antenna the cost of the repeater and the cost of the wireless communication system including the repeater are reduced.

The invention being thus described, it will be obvious that the same may be varied in many ways. Such variations are not to be regarded as a departure from the spirit and scope of the invention, and all such modifications are intended to be included within the scope of the following claims.

## Claims

1. A single antenna repeater, comprising:
a single antenna; and
circuitry associated with and connected to said antenna, said associated circuitry including,
an amplifier, and
a circulator having first, second and third terminals adjacent in a circulating direction such that signals received at said first terminal are transmitted to said second terminal, signals received at said second terminal are transmitted to said third terminal, and signals received at said third terminal are transmitted to said first terminal, said first terminal connected to said single antenna, said second terminal connected to an input of said amplifier, and said third terminal connected to an output of said amplifier.

2. The repeater of claim 1, wherein signals received at said first terminal and signals output from said first terminal are at a same frequency.

3. The repeater of claim 1, wherein an impedance of said antenna and said associated circuitry are matched.

4. A single antenna repeater, comprising:
a single antenna receiving signals and transmitting signals at a same frequency; and
circuitry associated with and connected to said antenna, said associated circuitry including,
a signal separator separating said received signals from said transmit signals on said antenna, and
an amplifier amplifying said separated received signals, and wherein
said signal separator supplies said amplified separated received signals to said antenna for transmission as said transmit signals.

5. The repeater of claim 4, wherein said signal separator is a circulator.

6. The repeater of claim 4, wherein an impedance of said antenna and said associated circuitry are matched.

7. A method of repeating a signal using a single antenna, comprising:
receiving a signal using a single antenna
supplying said received signal to a first terminal of circulator, said circulator having said first terminal and second and third terminals adjacent in a circulating direction;
supplying output from said second terminal of said circulator to an amplifier;
supplying output of said amplifier to said third terminal of said circulator; and
supplying output from said first terminal of said circulator to said antenna for transmission.

8. The method of claim 7, wherein said received signals and said output from said first terminal of said circulator are at a same frequency.

9. A method of repeating a signal using a single antenna, comprising:
receiving signals using a single antenna;
separating said received signals on said antenna from transmit signals on said antenna, said transmit signals being transmitted by said antenna and said transmit and said received signals being at a same frequency; and
amplifying said separated received signals; and
supplying said amplified separated received signals to said antenna for transmission as said transmit signals.

10. The method of claim 9, wherein said separating step is performed using a circulator.
